(19) Europäisches Patentamt
European Patent Office
Office européen des brevets

(11) Veröffentlichungsnummer: **0 599 284 A1**

(12) # EUROPÄISCHE PATENTANMELDUNG

(21) Anmeldenummer: **93118899.9**

(51) Int. Cl.[5]: **C08K 5/53**, C08L 45/00

(22) Anmeldetag: **24.11.93**

(30) Priorität: **27.11.92 DE 4239858**

(43) Veröffentlichungstag der Anmeldung:
**01.06.94 Patentblatt 94/22**

(84) Benannte Vertragsstaaten:
**BE CH DE ES FR GB IT LI NL PT**

(71) Anmelder: **HOECHST AKTIENGESELLSCHAFT**
**Brüningstrasse 50**
**D-65929 Frankfurt am Main(DE)**

(72) Erfinder: **Epple, Ulrich, Dr.**
**Alter Höchster Weg 8**
**D-65760 Eschborn(DE)**
Erfinder: **Regnat, Dieter, Dr.**
**Geisenheimer Strasse 97**
**D-65929 Frankfurt am Main(DE)**
Erfinder: **Kleiner, Hans-Jerg, Dr.**
**Altkönigstrasse 11a**
**D-61476 Kronberg/Ts.(DE)**

(54) **Cycloolefinpolymer-Formmasse mit verbesserter Stabilität gegen chemischen Abbau.**

(57) Eine Cycloolefinpolymer-Formmasse, welche phosphororganische Verbindungen der Formel IX

$R^{13} - [P(OR^{14})_2]_n$ (IX),

der Formel X

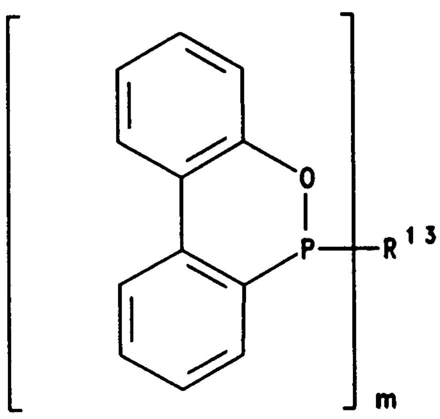

(X),

oder der Formel XI

EP 0 599 284 A1

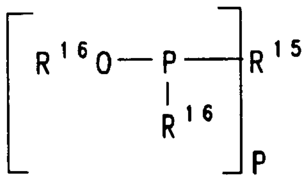

(XI)

gegebenenfalls neben anderen Additiven, enthält, zeigt eine verbesserte Stabilität gegen chemischen Abbau.

Die erfindungsgemäß verwendeten phosphororganischen Verbindungen bewahren die Schmelzviskosität der Formmasse auf höchstem Niveau (geringste Abweichung vom Ausgangswert). Sie führen außerdem zu besten Anfangsfarben der Prüflinge und zu geringerer Farbänderung nach Knetversuchen.

Die Erfindung bezieht sich auf eine Cycloolefinpolymer-Formmasse mit verbesserter Stabilität gegen chemischen Abbau, welche bestimmte phosphororganische Verbindungen als Stabilisatoren enthält.

Cycloolefinhomo- und -copolymere sind eine Polymerklasse mit herausragenden Eigenschaften. Sie zeichnen sich u.a. aus durch zum Teil hohe Wärmeformbeständigkeit, Witterungsbeständigkeit und Transparenz. Sie können in der Schmelze verarbeitet werden, beispielsweise durch Schmelzpressen, Kneten, Extrudieren oder Spritzgießen, und beispielsweise in Form von Platten, Fasern, Folien und Schläuchen angewendet werden. Insbesondere können aus ihnen optische Produkte, wie optische Disks, optische Linsen und optische Fasern hergestellt werden.

Dabei müssen die Polymeren eine gute Verarbeitungsstabilität besitzen und sollen während der Verarbeitung die Eigenfarbe nach Möglichkeit nicht verändern. Wichtig ist zudem, daß sie keine größeren Mengen Additive enthalten, da sonst die Lichtdurchlässigkeit leidet. Die eingesetzten Additive sollen also in der Polymer-Formmasse eine hohe Aktivität besitzen, eine geringe Gelbfärbung bewirken und mit dem Polymer mischbar sein. Man ist daher bestrebt, Cycloolefinpolymere durch geringste Mengen Additive ausreichend für die Verarbeitung und den Gebrauch zu stabilisieren.

Es ist bekannt, daß synthetische Polymere gegen unerwünschte oxidative, thermische und photochemische Schädigung während der Herstellung, der Verarbeitung und des Gebrauchs durch Stabilisatoren oder Stabilisatorsysteme geschützt werden müssen. Solche Stabilisatoren bestehen beispielsweise aus einem phenolischen Antioxidans, das insbesondere die Langzeit-Gebrauchsstabilität des Fertigteils gewährleisten soll, und einem oder mehreren Costabilisatoren, die die Verarbeitungsstabilität regeln und teilweise auch die Wirkung der phenolischen Komponente synergistisch verstärken.

Eine Schädigung des Polymeren bei der Herstellung, der Verarbeitung und des Gebrauchs macht sich vor allem in der Viskosität und dem Ausehen bemerkbar. Die Änderung der Viskosität tritt vor allem bei der Verarbeitung des Polymeren auf, während das Aussehen - die Eigenfarbe - sich vorwiegend bei der Verarbeitung und dem Gebrauch verändern kann.

Bekannt sind Cycloolefincopolymer-Formmassen mit 0,01 bis 5 Gew.-% organischen Phosphit- und/oder Phosphonit-Stabilisator-Systemen und wahlweise 0,01 - 1 Gew.-% höherem Fettsäuremetallsalz, die für optische Materialien anwendbar sind (vgl. JP 22 76 842, WO 90 08 173). Unter den organischen phosphorhaltigen Stabilisatoren werden Tris(2,4-di-t-butylphenyl)phosphit, Tris(nonylphenyl)phosphit und Tetrakis(2,4-di-t-butylphenyl)-4,4'-biphenylendiphosphonit genannt.

Derartige dreiwertige Phosphorverbindungen sind teilweise nicht hydrolysestabil und können im Laufe der Zeit ihre stabilisierende Eigenschaft verlieren.

Aufgabe der vorliegenden Erfindung war es daher, geeignete Stabilisatoren für Cyloolefinpolymer-Formmassen zu finden, die die Verarbeitungsstabilität und die Gebrauchsstabilität gewährleisten, ohne die Eigenfarbe zu verändern.

Die Aufgabe wurde gelöst durch den Einsatz besonderer phosphorhaltiger Stabilisatoren einzeln oder in Kombination mit anderen Additiven.

Die vorliegende Erfindung betrifft daher die in den Ansprüchen beschriebene Cycloolefinpolymer-Formmasse, ihre Herstellung und ihre Verwendung.

Die Synthese und die Eigenschaften von Cycloolefinpolymeren sind Gegenstand vieler Publikationen in jüngster Zeit. Es ist bekannt, daß diese Olefine mittels verschiedener Katalysatoren polymerisiert werden können. Dabei verläuft die Polymerisation in Abhängigkeit vom Katalysator über Ringöffnung oder unter Öffnung der Doppelbindung. Die unter Öffnung der Doppelbindung verlaufenden Cycloolefinpolymerisationen können sowohl mit neueren Katalysatorsystemen (vgl. EP 407 870, EP 485 893, EP 203 799) als auch mit einem klassischen Ziegler-Katalysatorsystem katalysiert werden (vgl. DD 222 317, DD 239 409).

Die erfindungsgemäße Cycloolefinpolymer-Formmasse enthält 90 bis 99,99, vorzugsweise 95 bis 99,975 Gew.-% eines Polymeren, welches Struktureinheiten enthält, die sich von mindestens einem Monomeren der Formeln I bis VII ableiten.

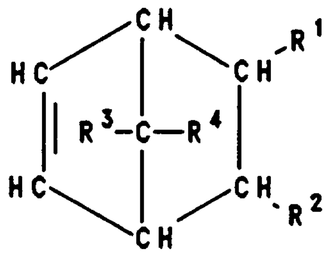

(I),

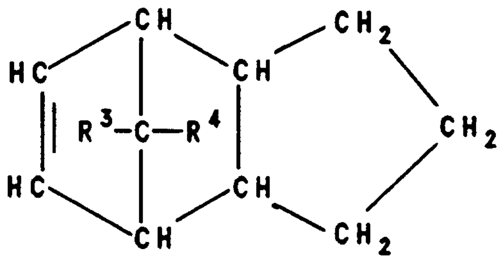

(II),

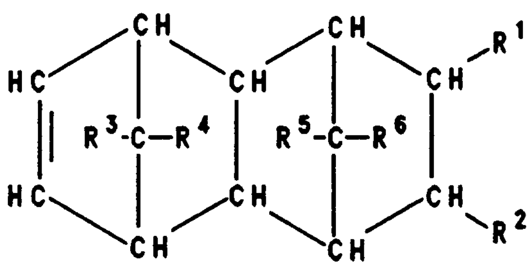

(III),

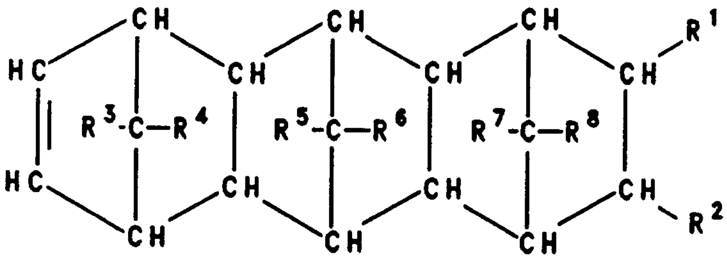

(IV),

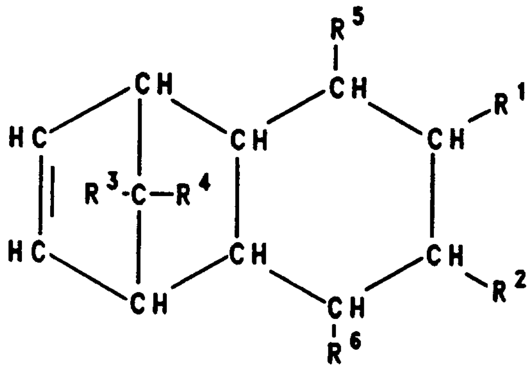

(V),

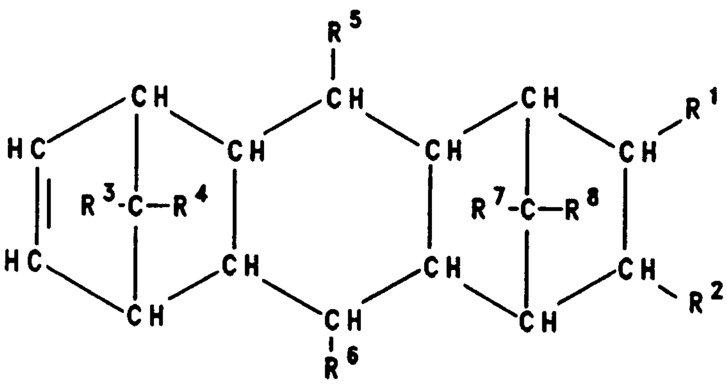

(VI),

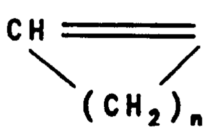

(VII)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$-$C_8$-Alkylrest, wobei gleiche Reste in den verschiedenen Formeln eine unterschiedliche Bedeutung haben können und n eine ganze Zahl von 2 bis 10 ist.

Die Cycloolefinpolymeren können neben den Struktureinheiten, die von mindestens einem Monomeren der Formeln I bis VII abgeleitet sind, weitere Struktureinheiten enthalten, die von mindestens einem acyclischen 1-Olefn der Formel VIII

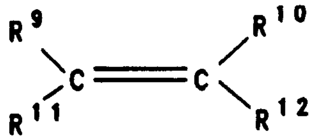

(VIII)

abgeleitet sind, worin $R^9$, $R^{10}$, $R^{11}$ und $R^{12}$ gleich oder verschieden sind und ein Wasserstoffatom oder einen $C_1$-$C_8$-Alkylrest bedeuten.

Bevorzugte Comonomere sind Ethylen oder Propylen. Es werden insbesondere Copolymere aus polycyclischen Olefinen der Formel I oder III, und den acyclischen Olefinen der Formel VIII, eingesetzt. Besonders bevorzugte Cycloolefine sind Norbornen und Tetracyclododecen, die durch $C_1$-$C_6$-Alkyl substituiert sein können, wobei Ethylen-Norbornen-Copolymere von besonderer Bedeutung sind. Von den monocyclischen Olefinen der Formel VII ist Cyclopenten, das substituiert sein kann, bevorzugt. Als polycyclische Olefine, monocyclische Olefine und offenkettige Olefine sind auch Gemische zweier oder mehrerer Olefine des jeweiligen Typs zu verstehen. Das heißt, es können Cycloolefinhomopolymere und -copolymere wie Bi-, Ter- und Multipolymere eingesetzt werden.

Zur erfindungsgemäßen Cycloolefinpolymer-Formmasse werden bevorzugt solche Cycloolefinpolymere verwendet, welche mittels Metallocen-Katalysatoren hergestellt wurden. Cycloolefinhomo- und -copolymere, die Struktureinheiten abgeleitet von Monomeren der Formeln I bis VI oder VII enthalten, werden bevorzugt mit Hilfe eines homogenen Katalysators hergestellt. Dieser besteht aus einem Metallocen, dessen Zentralatom ein Metall aus der Gruppe Titan, Zirkon, Hafnium, Vanadium, Niob und Tantal ist, welches mit zwei miteinander verbrückten ein- oder mehrkernigen Liganden eine Sandwichstruktur bildet, und einem Aluminoxan.

Die Struktur als auch die Polymerisation dieser Cycloolefine ist anderenorts ausführlich beschrieben (vgl. EP 407 870, EP 485 893, EP 501 370, EP 503 422, DE 42 05 416). Hierbei handelt es sich um Cycloolefinpolymere, die sich teilweise in ihrer chemischen Einheitlichkeit und ihrer Polydispersität unterscheiden.

Als Stabilisator enthält die Formmasse mindestens eine phosphororganische Verbindung der Formel IX

$R^{13}$ - $[P(OR^{14})_2]_n$ (IX)

worin

n 1 oder 2 ist,

$R^{14}$ einen linearen oder verzweigten $C_8$-$C_{20}$-Alkylrest oder einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl- oder $C_7$-$C_{10}$-Aralkylreste substituiert sein kann, bedeutet,

$R^{13}$ bei n = 1 einen Phenyl- oder Benzylrest, welcher 1 bis 3 Substituenten tragen kann, einen $\alpha$-Methylbenzyl-, $\alpha,\alpha$-Dimethylbenzyl- oder Naphthylrest oder einen 1 bis 5 Substituenten tragenden Naphthylrest bedeutet, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest,einen $C_6$-$C_{10}$-Arylrest, einen $C_6$-$C_{10}$-Aryloxyrest oder Halogen mit einer Ordnungszahl von 9 bis 35 darstellen, und

$R^{13}$ bei n = 2 einen Phenylenrest, einen Biphenylenrest, einen Naphthylenrest, einen Diphenylenoxidrest, die unsubstituiert sind oder 1 bis 4 lineare oder verzweigte $C_1$-$C_8$-Alkylreste tragen, darstellt,

ein Dibenzo-[c,e][1,2]-oxaphosphorin der Formel X

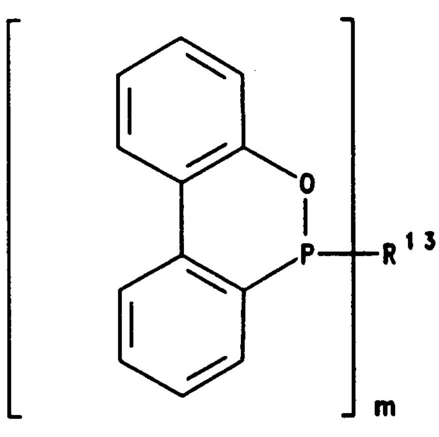

(X),

worin $R^{13}$ die zuvor genannte Bedeutung hat und m 1 oder 2 ist,

ein Diarylphosphinigsäure-arylester der Formel XI

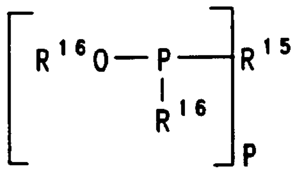

(XI)

worin die Reste $R^{16}$ unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen, und
$R^{15}$ als zweiwertiger Rest einen Phenylen-, Diphenylenoxid- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt, p 1 oder 2 ist und $R^{16}$ die vorgenannte Bedeutung hat.

Von den Verbindungen der Formel IX werden bevorzugt eingesetzt 4-Biphenylphosphonigsäure-bis-(2,4-di-t-butylphenyl)-ester, 1-Naphthyl-phosphonigsäure-bis-(2,4-di-t-butylphenyl)-ester, Benzol-1,4-diphosphonigsäure-tetra-(2,4-di-t-butylphenyl)-ester, 1-Naphthyl-phosphonigsäure-bis-(2,4-di-t-butylphenyl)-ester, Tetrakis-(2,4-di-t-butylphenyl)-4,4'-biphenylendiphosphonit, 2,4,6-Trimethylphenylphosphonigsäure-bis-(2,4-di-t-butylphenyl)-ester,Tetrakis-(2,4-di-t-butylphenyl)-4,4'-diphenylenoxid-diphosphonit, welches jeweils mit 0,01 bis 5 Gew.-% eines Oxids, eines Carbonats, eines Bicarbonats oder eines Carboxylats eines Metalls der Gruppen 1a, 2a, 2b und 7b des Periodensystems der Elemente behandelt wurde.

Beispiele für geeignete Verbindungen der Formel X sind 6-(2',4',6'-Trimethylphenyl)-6H-dibenzo-[c,e]-[1.2]-oxaphosphorin, 6-(4'-Methoxy-phenyl)-6H-dibenzo-[c,e][1.2]-oxaphosphorin, 6-(2'-Tolyl)-6H-dibenzo-[c,e][1.2]-oxaphosphorin, 6-(3'-Tolyl)-6H-dibenzo-[c,e][1.2]-oxaphosphorin, 6-(4'-t-Butyl-phenyl)-6H-dibenzo-[c,e][1.2]-oxaphosphorin, 6-(4'-Methyl-1'-naphthyl)-6H-dibenzo-[c,e][1.2]-oxaphosphorin.

Beispiele für geeignete Verbindungen der Formel XI sind 2,4,6-Trimethylphenylphenylphosphinigsäure-2,4-di-t-butylphenylester, 2,4,6-Trimethylphenyl-1-naphthylphosphinigsäure-2,4-di-t-butylphenylester, Bis-(4-biphenyl)phosphinigsäure-2,4-di-t-butylphenylester, Bis-(1-naphthyl)phosphinigsäure-2,4-di-t-butylphenylester, 4,4'-Biphenylen-bis-(1-naphthyl-phosphinigsäure-2,4-di-t-butylphenylester), 2,4-Trimethylphenyl-4-methoxyphenylphosphinigsäure-2,4,6-tri-t-butylphenylester, 2,4-Bis-(4-chlorphenyl)phosphinigsäure-2-t-butylphenylester, Bis-(2-methoxyphenyl)phosphinigsaure-2,4-di-t-butylphenylester, 1,4-Phenylen-bis-(1-naphthylphosphinigsäure-2,4,6-tri-t-butylphenylester), 1,4-Naphthylen-bis-(1-naphthylphosphinigsäure-2,4-di-t-butylphenylester), Bis-[4-(N,N-dimethylamino)phenyl]-phosphinigsäure-2,4-di-t-butylphenylester, 1-Naphthyl-2-methoxyphenylphosphinigsäure-2,4-di-t-butylphenylester, 1-Naphthyl-4-t-butylphenylphosphinigsäure-2,6-di-t-butylphenylester,4,4'-Biphenylen-bis-(2,4,6-trimethylphenylphosphinigsäure-2,4-di-t-butylphenylester).

Von den Verbindungen der Formeln IX, X und XI sind die Oxaphosphorine, die Phosphinigsäure- und die Phosphonigsäureester besonders bevorzugt, ganz besonders die Phosphinigsäure- und Phosphonigsäureester.

Außerdem kann das Stabilisierungssystem ein oder mehrere phenolische Antioxidantien, ein oder mehrere Lichtschutzmittel oder Alkali- und Erdalkalisalze höherer Fettsäuren oder Phenolate enthalten.

Da die Einzelstabilisatoren bei der Kombination in der Polymer-Formmasse bei der Verarbeitung und beim Gebrauch in unbekannter Weise reagieren können, müssen sie einzeln und in der Stabilisatormischung geprüft werden.

Das phenolische Antioxidans ist beispielsweise ein Ester der 3,3-Bis-(3'-t-butyl-4'-hydroxyphenyl)-butansäure der Formel XII

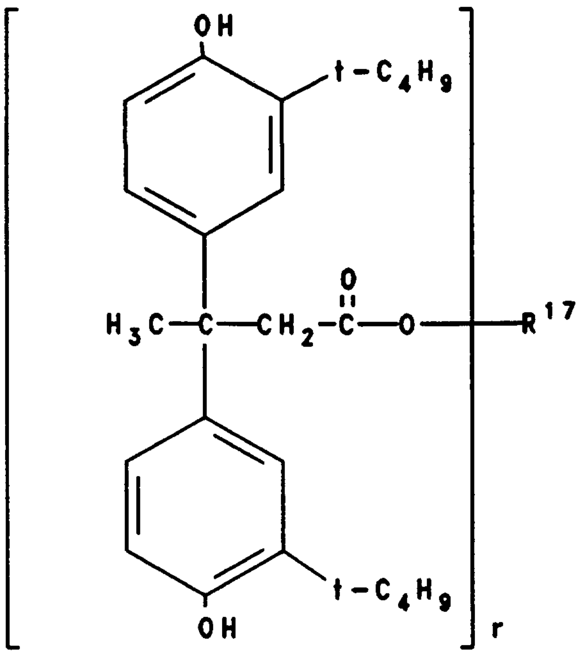

(XII)

worin $R^{17}$ einen $C_1$-$C_{12}$-Alkylrest oder einen $C_1$-$C_{12}$-Alkylenrest bedeutet und r 1 oder 2 ist. Vorzugsweise ist $R^{17}$ ein $C_2$-$C_4$-Alkylenrest, insbesondere ein $C_2$-Alkylenrest.

Das phenolische Antioxidans kann jedoch auch ein Ester der $\beta$-(3,5-Di-t-butyl-4-hydroxy-phenyl)-propionsäure der Formel XIII

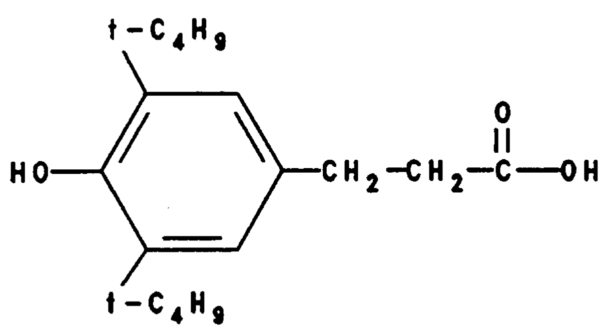

(XIII)

sein, wobei die Alkoholkomponente ein ein- oder mehrwertiger Alkohol, wie beispielsweise Methanol, Octadecanol, 1,6-Hexandiol, Neopentylglykol, Thiodiethylenglykol, Diethylenglykol, Triethylenglykol, Pentaerythrit, Tris-hydroxyethyl-isocyanurat, Di-hydroxyethyl-oxalsäurediamid, ist.

Zusätzlich kann die zu stabilisierende Cycloolefinpolymer-Formmasse noch folgende Antioxidantien enthalten, wie beispielsweise:

1. Alkylierte Monophenole, beispielsweise
2,6-Di-t-butyl-4-methylphenol, 2-t-Butyl-4,6-dimethylphenol, 2,6-Di-t-butyl-4-ethylphenol, 2,6-Di-t-butyl-4-i-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol.

2. Alkylierte Hydrochinone, beispielsweise
2,6-Di-t-butyl-4-methoxyphenol, 2,5-Di-t-butyl-hydrochinon, 2,5-Di-t-amyl-hydrochinon, 2,6-Diphenyl-4-octadecyloxyphenol.

3. Hydroxylierte Thiodiphenylether, beispielsweise
2,2'-Thio-bis-(6-t-butyl-4-methylphenol), 2,2'-Thio-bis-(4-octylphenol), 4,4'-Thio-bis-(6-t-butyl-3-methylphenol), 4,4'-Thio-bis-(6-t-butyl-2-methylphenol).

4. Alkyliden-Bisphenole, beispielsweise
2,2'-Methylen-bis-(6-t-butyl-4-methylphenol), 2,2'-Methylen-bis(6-t-butyl-4-ethylphenol), 2,2'-Methylen-bis-

[4-methyl-6-($\alpha$-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-t-butylphenol), 2,2'-Ethyliden-bis-(4,6-di-t-butylphenol), 2,2'-Ethyliden-bis-(6-t-butyl-4-isobutylphenol), 2,2'-Methylen-bis-[6-($\alpha$-methylbenzyl)-4-nonylphenol], 2,2'-Methylen-bis-[6-($\alpha$,$\alpha$-dimethylbenzyl)-4-nonylphenol], 4,4'-Methylen-bis-(2,6-di-t-butylphenol), 4,4'-Methylen-bis(6-t-butyl-2-methylphenol), 1,1-Bis-(5-t-butyl-4-hydroxy-2-methylphenyl)-butan, 2,6-Di-(3-t-butyl-5-methyl-2-hydroxybenzyl)-4-methylphenol, 1,1,3-Tris-(5-t-butyl-4-hydroxy-2-methylphenyl)-butan, 1,1-Bis-(5-t-butyl-4-hydroxy-2-methylphenyl)-3-n-dodecylmercaptobutan, Di-(3-t-butyl-4-hydroxy-5-methylphenyl)-dicyclo-pentadien, Di-[2-(3'-t-butyl-2'-hydroxy-5'-methyl-benzyl)-6-t-butyl-4-methyl-phenyl]-terephthalat, Ethylenglykol-bis-[3,3-bis-(3'-t-butyl-4'-hydroxyphenyl)-butyrat].

5. Benzylverbindungen, beispielsweise

1,3,5-Tri-(3,5-di-t-butyl-4-hydroxybenzyl)-2,4,6-trimethylbenzol, Di-(3,5-di-t-butyl-4-hydroxybenzyl)-sulfid, 3,5-Di-t-butyl-4-hydroxybenzyl-mercaptoessigsäureisooctylester, Bis-(4-t-butyl-3-hydroxy-2,6-dimethylbenzyl)-dithiol-terephthalat, 1,3,5-Tris-(3,5-di-t-butyl-4-hydroxybenzyl)-isocyanurat, 1,3,5-Tris-(4-t-butyl-3-hydroxy-2,6-dimethylbenzyl)-isocyanurat, 3,5-Di-t-butyl-4-hydroxybenzyl-phosphonsäure-dioctadecylester, Calciumsalz des 3,5-Di-t-butyl-4-hydroxybenzyl-phosphonsäure-mono-ethylesters.

6. Acylaminophenole, beispielsweise

4-Hydroxy-laurinsäureanilid, 4-Hydroxy-stearinsäureanilid, 2,4-Bis-octylmercapto-6-(3,5-di-t-butyl-4-hydroxy-anilino)-s-triazin, N-(3,5-Di-t-butyl-4-hydroxyphenyl)-carbaminsäure-octylester.

7. Ester der $\beta$-(5-t-Butyl-4-hydroxy-3-methylphenyl)-propionsäure mit ein- oder mehrwertigen Alkoholen, wie z.B. mit

Methanol, Diethylenglykol, Octadecanol, Triethylenglykol, 1,6-Hexandiol, Pentaerythrit, Neopentylglykol, Tris-hydroxyethyl-isocyanurat, Thiodiethylenglykol,Di-hydroxyethyl-oxalsäurediamid.

8. Amide der $\beta$-(3,5-Di-t-butyl-4-hydroxyphenyl)-propionsäure, wie z.B.

N,N'-Di-(3,5-di-t-butyl-4-hydroxyphenylpropionyl)-hexamethylendiamin,N,N'-Di-(3,5-di-t-butyl-4-hydroxyphenylpropionyl)-trimethylendiamin, N,N'-Di-(3,5-di-t-butyl-4-hydroxyphenylpropionyl)-hydrazin.

Daneben können die zu stabilisierenden Polymeren noch weitere Additive enthalten, wie beispielsweise:

1. UV-Absorber und Lichtschutzmittel

1.1 2-(2'-Hydroxyphenyl)-benztriazole, wie z.B. das 5'-Methyl-, 3',5'-Di-t-butyl-, 5'-t-Butyl-, 5'-(1,1,3,3-Tetramethylbutyl)-, 5-Chlor-3',5'-di-t-butyl-, 5-Chlor-3'-t-butyl-5'-methyl-, 3'-sec.-Butyl-5'-t-butyl-, 4'-Octoxy-, 3',5'-Di-t-amyl-, 3',5'-Bis($\alpha$,$\alpha$-dimethylbenzyl)-Derivat.

1.2 2-Hydroxybenzophenone, beispielsweise das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

1.3 Ester von gegebenenfalls substituierten Benzoesäuren, beispielsweise 4-t-Butyl-phenylsalicylat, Phenylsalicylat, Octylphenylsalicyalat, Dibenzoylresorcin, Bis-(4-t-butylbenzoyl)resorcin, Benzoylresorcin, 3,5-Di-t-butyl-4-hydroxybenzoesäure-2,4-di-t-butylphenylester, 3,5-Di-t-butyl-4-hydroxybenzoesäurehexadecylester.

1.4 Acrylate, beispielsweise

$\alpha$-Cyan-$\beta$,$\beta$-diphenylacrylsäure-ethylester bzw. -iso-octylester, $\alpha$-Carbomethoxyzimtsäuremethylester, $\alpha$-Cyano-$\beta$-methyl-p-methoxyzimtsäuremethylester bzw. -butylester, $\alpha$-Carbomethoxy-p-methoxyzimtsäure-methylester,N-($\beta$-Carbomethoxy-9-cyano-vinyl)-2-methyl-indolin.

1.5 Nickelverbindungen, beispielsweise

Nickelkomplexe des 2,2'-Thio-bis-[4-(1,1,3,3-tetramethyl-butyl)-phenols], wie der 1:1- oder 1:2-Komplex, gegebenenfalls mit zusätzlichen Liganden wie n-Butylamin, Triethanolamin oder N-Cyclohexyldiethanolamin, Nickelalkyldithiocarbamate, Nickelsalze von 4-Hydroxy-3,5-di-t-butyl-benzylphosphonsäure-mono-alkylestern wie vom Methyl- oder Ethylester, Nickelkomplexe von Ketoximen wie vom 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden, Nickelsalze der 2-Hydroxy-4-alkoxybenzophenone.

1.6 Sterisch gehinderte Amine, beispielsweise

1.6.1 Bis(2,2,6,6-tetramethylpiperidyl)-sebacat, Bis-(1,2,2,6,6-pentamethylpiperidyl)-sebacat, Bis-(2,2,6,6-tetramethylpiperidyl)-glutarat, Bis-(1,2,2,6,6-pentamethylpiperidyl)-glutarat, Bis-(2,2,6,6-tetramethylpiperidyl)-succinat, Bis-(1,2,2,6,6-pentamethylpiperidyl)-succinat, 4-Stearyloxy-2,2,6,6-tetramethylpiperidin, 4-Stearyloxy-1,2,2,6,6-pentamethylpiperidin, 4-Stearoyloxy-2,2,6,6-tetramethylpiperidin, 4-Stearoyloxy-1,2,2,6,6-pentamethylpiperidin, 2,2,6,6-Tetramethylpiperidylbehenat, 1,2,2,6,6-Pentamethylpiperidylbehenat, 2,2,4,4-Tetramethyl-7-oxa-3,20-diazadispiro-[5.1.11.2]-heneicosan-21-on, 2,2,3,4,4-Penta-methyl-7-oxa-3,20-diazadispiro-[5.1.11.2]-heneicosan-21-on, 2,2,4,4-Tetramethyl-3-acetyl-7-oxy-3,20-diaza-dispiro-[5.1.11.2]-heneicosan-21-on, 2,2,4,4-Tetramethyl-7-oxa-3,20-diaza-20-($\beta$-lauryl-oxycarbonylethyl)-21-oxo-dispiro-[5.1.11.2]-heneicosan, 2,2,3,4,4-Pentamethyl-7-oxa-3,20-diaza-20-($\beta$-lauryloxycarbonylethyl)-21-oxo-dispiro-[5.1.11.2]-heneicosan, 2,2,4,4-Tetramethyl-3-acetyl-7-oxa-3,20-diazo-20-(β-lauryloxycarbonyl-ethyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)biphenyl, N,N',N'',N'''-Tetrakis-[2,4-bis-[N-(2,2,6,6-tetramethyl-4-piperidyl)-butylamino]-1,3,5-triazin-6-yl]-4,7-diazadecan-1,10-diamin, N,N',N'',N'''-Tetrakis[2,4-bis-[N(1,2,2,6,6-pentamethyl-4-pipendyl)-butylamino]-1,3,5-triazin-6-yl]-4,7-diazadecan-1,10-diamin, N,N',N'',N'''-Tetrakis-[2,4-bis-[N-(2,2,6,6-tetramethyl-4-piperidyl)-methoxypropylamino]-1,3,5-Triazin-6-yl]-4,7-diazadecan-1,10-diamin, N,N',N'',N'''-Tetrakis-[2,4-bis-[N-(1,2,2,6,6-pentamethyl-4-piperidyl)-methoxypropylamino]-1,3,5-triazin-6-yl]-4,7-diazadecan-1,10-diamin, Bis-(1,2,2,6,6-pentamethyl-piperidyl)-n-butyl-3,5-di-t-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

1.6.2 Poly-N,N'-bis(2,2,6,6-tetramethyl-4-piperidyl)-1,8-diazadecylen, Kondensationsprodukt aus 1-(2-Hydroxyethyl)-2,2,6,6-tetramethyl-4-hydroxy-piperidin und Bernsteinsäure, Kondensationsprodukt aus N,N'-Bis-(2,2,6,6-tetramethyl-4-piperidyl)-hexamethylendiamin und 4-t-Octylamino-2,6-dichlor-1,3,5-triazin, Kondensationsprodukt aus N,N'-Bis-(2,2,6,6-tetramethyl-4-piperidyl)-hexamethylendiamin und 4-Morpholino-2,6-dichlor-1,3,5-triazin.

1.7 Oxalsäurediamide, beispielsweise 4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von o- und p-Methoxy- sowie von o- und p-Ethoxy-di-substituierten Oxaniliden.

2. Metalldesaktivatoren, beispielsweise

N,N'-Diphenyloxalsäurediamid, N-Salicylyl-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloylamino-1,2,3-triazol, Bis-benzyliden-oxalsäuredihydrazid.

3. Phosphite und Phosphonite, beispielsweise

Triphenylphosphit, Diphenylalkylphosphite, Phenyldialkylphosphite, Trisnonylphenylphosphit, Trilaurylphosphit, Trioctadecylphosphit, Distearylpentaerythrityl-diphosphit, Tris-(2,4-di-t-butylphenyl)-phosphit, Diisodecyl-pentaerythrityl-diphosphit, Bis-(2,4-di-t-butylphenyl)-pentaerythrityl-diphosphit, Tristearyl-sorbityltriphosphit, 3,9-Bis-(2,4-di-t-butylphenoxy)-2,4,8,10-tetraoxa-3,9-diphosphaspiro-[5.5]-undecan, Tris-(2-t-butyl-4-thio-(2'-methenyl-4'-hydroxy-5'-t-butyl)-phenyl-5-methenyl)-phenylphosphit.

4. Peroxidzerstörende Verbindungen, beispielsweise

Ester der β-Thio-dipropionsäure, wie beispielsweise der Lauryl-, Stearyl-, Myristyl- oder Tridecylester, Mercaptobenzimidazol, das Zinksalz des 2-Mercaptobenzimidazols, Zink-alkyl-dithiocarbamate, Dioctadecylsulfid, Dioctadecyldisulfid, Pentaerythrit-tetrakis-(β-dodecylmercapto)-propionat.

5. Basische Co-Stabilisatoren, beispielsweise

Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.

6. Nukleierungsmittel, beispielsweise

4-t-Butylbenzoesäure, Adipinsäure, Diphenylessigsäure, Dibenzylidensorbitol.

7. Füllstoffe und Verstärkungsmittel, beispielsweise

Calciumcarbonat, Silikate, Glasfasern, Asbest, Talk, Kaolin, Glimmer, Bariumsulfat, Metalloxide und -hydroxide, Ruß, Graphit, Hochmodulfasern.

8. Sonstige Zusätse, beispielsweise

Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 7 und 8 beträgt 1 bis 80, vorzugsweise 10 bis 60 Gew.-%, bezogen auf die gesamte Formmasse.

Die Stabilisatoren werden nach allgemein üblichen Methoden in die Cycloolefinpolymeren eingearbeitet. Die Einarbeitung kann beispielsweise durch Einmischen der Verbindungen und gegebenenfalls weiterer Additive in die Schmelze vor oder während der Formgebung erfolgen. Auch durch Aufbringung der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösungsmittels kann die Einarbeitung erfolgen. Die den Polymeren zuzusetzende Menge liegt bei 0,01 bis

10, vorzugsweise 0,025 bis 5, insbesondere 0,02 bis 2 Gew.-%, bezogen auf das zu stabilisierende Cycloolefinpolymer.

Die Stabilisatoren können auch in Form eines Masterbatches, der diese Verbindungen beispielsweise in einer Konzentration von 1 bis 50, vorzugsweise 2,5 bis 20 Gew.-% enthält, den zu stabilisierenden Polymeren zugesetzt werden.

Die erfindungsgemäß verwendeten phosphororganischen Verbindungen bewahren die Schmelzviskosität der Formmasse auf höchstem Niveau (geringste Abweichung vom Ausgangswert). Sie führen außerdem zu den besten Anfangsfarben der Prüflinge und zu geringerer Farbänderung nach den Knetversuchen.

Die erfindungsgemäß stabilisierte Cycloolefinpolymer-Formmasse kann in verschiedener Form angewendet werden, z.B. in Form von Platten, Fasern, Folien und Schläuchen oder als Bindemittel für Lacke, Klebstoffe oder Kitte.

Für die Beispiele wurden folgende Polymere nach Standardmethoden hergestellt:

Cycloolefincopolymer A1 [COC A1]

Ein sauberer und trockener 75-$dm^3$-Polymerisationsreaktor mit Rührer wurde mit Stickstoff und dann mit Ethylen gespült. Anschließend wurden 37 $dm^3$ Benzinfraktion (100/110) und 10700 g Norbornenschmelze im Polymerisationsreaktor vorgelegt. Unter Rühren wurde der Reaktor auf eine Temperatur von 70 °C gebracht und 2,9 bar Ethylen aufgedrückt.

Danach wurden 500 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 2,9 bar gehalten wurde. Parallel dazu wurden 350 mg Diphenylmethylen-(9-fluorenyl)-cyclopentadienyl-zirkondichlorid in 500 $cm^3$ toluolischer Methylaluminoxanlösung (Konzentration und Qualität siehe oben) gelöst und durch 15 minütiges Stehenlassen voraktiviert. Dann wurde die Lösung des Metallocens (Katalysatorlösung) in den Reaktor dosiert. Unter Rühren wurde der Ansatz 135 min bei 70 °C polymerisiert, wobei der Ethylendruck durch Nachdosieren bei 2,9 bar gehalten wurde. Nun wurde der Reaktorinhalt schnell in ein Rührgefäß abgelassen, in dem 40 $dm^3$ Benzinfraktion (100/110), 1000 g Kieselgur (®Celite J 100) sowie 200 $cm^3$ Eiswasser bei 70 °C vorgelegt waren. Die Mischung wurde filtriert, so daß das Filterhilfsmittel zurückgehalten wurde und eine klare Polymerlösung als Filtrat resultierte. Die klare Lösung wurde in Aceton ausgefällt, 10 min gerührt und dann der suspendierte polymere Feststoff abfiltriert.

Um restliches Lösemittel aus dem Polymer zu entfernen, wurde das Polymer noch 2 mal mit Aceton ausgerührt und abfiltriert. Die Trocknung erfolgte bei 80 °C unter Vakuum innerhalb 15 Stunden. Man erhielt 3400 g Polymer.

Herstellung von Cycloolefincopolymer A2 [COC A2]

Ein sauberer und trockener 75-$dm^3$-Polymerisationsreaktor mit Rührer wurde mit Stickstoff und dann mit Ethylen gespült. Anschließend wurden 20550 g Norbornenschmelze im Polymerisationsreaktor vorgelegt. Unter Rühren wurde der Reaktorinhalt auf eine Temperatur von 70 °C gebracht und 3,5 bar Ethylen aufgedrückt.

Danach wurden 1000 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 min bei 70 °C gerührt, wobei durch Nachdosieren der Ethylendruck bei 3,5 bar gehalten wurde. Parallel dazu wurden 350 mg Diphenylmethylen-(9-fluorenyl)-cyclopentadienyl-zirkondichlorid in 500 $cm^3$ toluolischer Methylaluminoxanlösung (Konzentration und Qualität siehe oben) gelöst und durch 15 minütiges Stehenlassen voraktiviert. Dann wurde die Lösung des Metallocens (Katalysatorlösung) in den Reaktor dosiert. Unter Rühren wurde der Ansatz 233 min bei 70 °C polymerisiert, wobei der Ethylendruck durch Nachdosieren bei 3,5 bar gehalten wurde. Nun wurde der Reaktorinhalt schnell in ein Rührgefäß abgelassen, in dem 40 $dm^3$ Benzinfraktion (100/110), 1000 g Kieselgur (®Celite J 100) sowie 200 $cm^3$ Eiswasser bei 70 °C vorgelegt waren. Die Mischung wurde filtriert, so daß das Filterhilfsmittel zurückgehalten wurde und eine klare Polymerlösung als Filtrat resultierte. Die klare Lösung wurde in Aceton ausgefällt, 10 min gerührt und dann der polymere Feststoff abfiltriert.

Um restliches Lösemittel aus dem Polymer zu entfernen, wurde das Polymer noch 2mal mit Aceton ausgerührt und abfiltriert. Die Trocknung erfolgte bei 80 °C unter Vakuum innerhalb 15 Stunden. Es wurden 5200 g Polymer erhalten.

Die physikalischen Kenndaten der Cycloolefincopolymeren A1 und A2 sind Tabelle 1 zu entnehmen.

Tabelle 1

| Cycloolefincopolymer | Einbau* von Ethylen [mol-%] | Norbornen [mol-%] | VZ [$cm^3$/g] | Tg [°C] |
|---|---|---|---|---|
| A1 | 54 | 46 | 143 | 145 |
| A2 | 55 | 45 | 141 | 139 |

* ermittelt durch $^{13}$C-Kernmagnet-Resonanzspektroskopie
VZ: Viskositätszahl gemäß DIN 53 728
Tg: Glasstufe beim 2. Aufheizen; Aufheiz- und Abkühlgeschwindigkeit: 20°/min

Beispiele

Für die Versuche wurden die nachstehend aufgelisteten phosphororganischen Verbindungen eingesetzt.

(A) Tetrakis-(2,4-di-t-butylphenyl)-4,4'-biphenylen-diphosphonit, käufliches Produkt

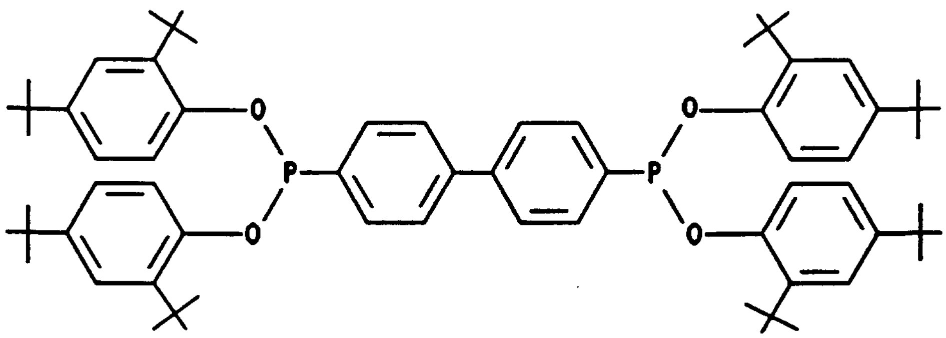

Gehalt 40 % ($^{31}$P-NMR)

(B) Tetrakis-(2,4-di-t-butylphenyl)-4,4'-biphenylen-diphosphonit, hydrolysestabilisiert gemäß DE 42 18 411 mit MgO

Gehalt 40 % ($^{31}$P-NMR)

(C) Tetrakis-(2,4-di-t-butylphenyl)-4,4'-biphenylen-diphosphonit gemäß Beispiel 2a DE 42 18 411

Gehalt 70 % ($^{31}$P-NMR)

(D) 6-(2'-Tolyl)-6H-dibenzo-[c,e][1.2]-oxaphosphorin

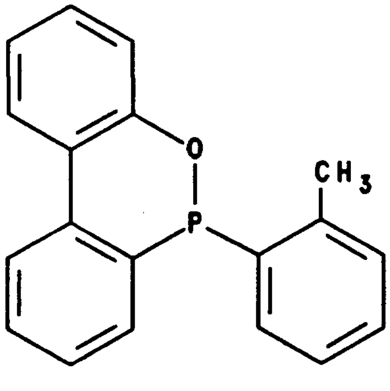

Gehalt ca. 97 % ($^{31}$P-NMR)

(E) Bis-(1-naphthyl)phosphinigsäure-2,4-di-t-butylphenyl-ester

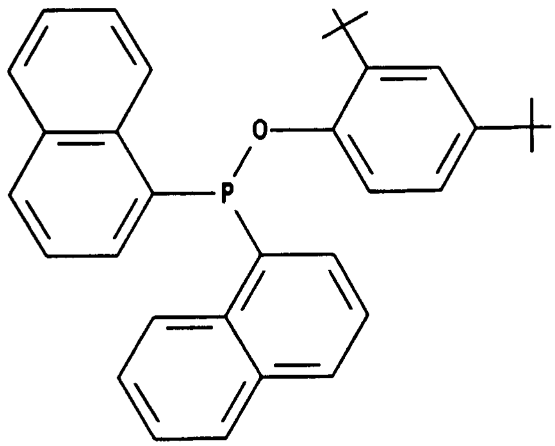

Gehalt ca. 90 % ($^{31}P$-NMR)
(F) 1-Naphthyl-phosphonigsäure-bis-(2,4-di-t-butylphenyl)ester

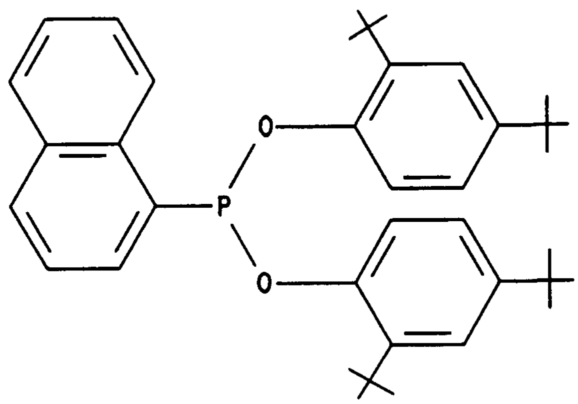

Gehalt ca. 98 % ($^{31}P$-NMR)
Die Herstellung dieser Verbindungen ist in US 5,109,043, EP 472 564 und WO 92/00306 beschrieben. Weitere Herstellmethoden werden in DE 41 24 790 und DE 42 18 411 vorgeschlagen.

Auf das Pulver der oben beschriebenen Cycloolefinpolymeren wurden die in den Tabellen angegebenen Mengen an Stabilisatoren als Lösungen aufgebracht und getrocknet (130 °C, 24 Stunden, Vakuum). Die so vorbehandelten Polymeren wurden mittels eines Meßkneters ( ®Rheocord System 40/®Rheomix 600; Fa. Haake, Karlsruhe) unter den angegebenen Bedingungen geknetet. Die erhaltenen Knetlinge wurden teilweise zu Platten (120 x 1 mm) verpreßt (Vakuumpresse: ®Polystat 200 S; Fa. Schwabenthan, Berlin). Zusätzlich wurden vom Ausgangspulver der Cycloolefincopolymeren (ohne/mit Stabilisatoren) Platten hergestellt.

An den hergestellten Platten wurden die Vergilbung als Yellowness Index nach ASTM D 1925-70 gemessen.

Der andere Teil der Knetlinge wurde gemahlen und getrocknet (130 °C, 24 h, Vakuum) und der Schmelzindex nach DIN 53 735 bestimmt.

Außerdem wurde die Vergilbung nach Warmlagerung (7 Tage bei 100 °C) gemessen.

Die angegebenen eingesetzten Mengen Additive sind Gew.-Teile pro 100 Gew.-Teile (phr) Cycloolefincopolymer.

Die Ergebnisse sind den Tabellen 2 bis 12 zu entnehmen.

In den Tabellen bedeuten

Phenol

[1] 3,3-Bis-(3'-t-butyl-4'-hydroxyphenyl)-butansäure-ethylenglykolester

[2] HALS = Hindered Amine Light Stabilizer 2,2,4,4-Tetramethyl-7-oxa-3,20-diazadispiro-[5.1.11.2]-heneicosan-21-on

3) oligomerisiertes 2,2,4,4-Tetramethyl-7-oxa-3,20-diaza-20-(2,3-epoxypropyl)-dispiro-[5.1.11.2]-heneicosan-21-on

4)N,N',N'',N'''-tetrakis-{2,4-bis-[N-(1,2,2,6,6-pentamethyl-4-piperidyl)-butylamino]-1,3,5-triazin-6-yl}-4,7-diazadecan-1,10-diamin

5) Bis-(2,2,6,6-tetramethyl-piperidyl)-sebacat

6) Kondensationsprodukt aus N,N'-bis-(2,2,6,6-tetramethyl-4-piperidyl)-hexamethylendiamin und 4-t-Octylamino-2,6-dichlor-1,3,5-s-triazin

**Tabelle 2**

**Wirkung von Phosphorverbindungen auf die Verarbeitungsstabilität des Cycloolefincopolymeren A1**

**Knetbedingungen: 280°C, 40 Upm, 60 min**

**Schmelzindex MFI 280/5 (5 min Aufschmelzzeit) vor dem Kneten: 5 $cm^3$/10 min.**

| Beispiel | Phosphorverbindung Gew.-Teile | sonst. Additive Gew.-Teile | MFI nach Kneten $cm^3$/10 min |
|---|---|---|---|
| Vgl. I | keine | | 39,1 |
| Vgl. II | 0,1 (A) | | 52,5 |
| 1a | 0,1 (B) | | 47,0 |
| 1b | 0,1 (C) | | 32,1 |
| 1c | 0,1 (B) | 0,05 Phenol[1)] | 51,0 |
| 1d | 0,1 (C) | 0,05 Phenol[1)] | 26,6 |

Tabelle 3

| Farbveränderung (Yellowness Index nach ASTM D 1925-70) nach Extremknetversuch (280 ° C, 40 Upm, 60 min) des Cycloolefincopolymeren A1 | | | | |
|---|---|---|---|---|
| Beispiel | Phosphorverbindung Gew.-Teile | sonst. Additive Gew.-Teile | YI | |
| | | | ungeknetet | geknetet |
| Vgl. I | keine | | 5,3 | 85,9 |
| vgl. II | 0,1 (A) | | 6,7 | 70,9 |
| 1a | 0,1 (B) | | 8,5 | 72,2 |
| 1b | 0,1 (C) | | 6,7 | 74,6 |
| 1c | 0,1 (B) | 0,05 Phenol [1)] | 8,4 | 68,3 |
| 1d | 0,1 (C) | 0,05 Phenol [1)] | 5,8 | 71,9 |

Tabelle 4

Wirkung von Phosphorverbindungen auf die Verarbeitungsstabilität des Cycloolefincopolymeren A1

Knetbedingungen: 240°C, 40 Upm, 60 min

Schmelzindex MFI 240/21,6 (5 Minuten Aufschmelzzeit) vor dem Kneten: 19,2 $cm^3$/10 min

| Beispiel | Phosphorverbindung Gew.-Teile | sonst. Additive Gew.-Teile | MFI nach Kneten $cm^3$/10 min |
|---|---|---|---|
| Vgl. III | keine | | 33,0 |
| 2a | 0,1 (C) | | 28,7 |
| 2b | 0,1 (C) | 0,05 Phenol 1) | 26,6 |
| 2c | 0,1 (C) | 0,05 Phenol 1)<br>0,3 HALS 2) | 21,0 |
| 2d | 0,1 (C) | 0,05 Phenol 1)<br>0,3 HALS 3) | 18,6 |
| 2e | 0,1 (C) | 0,05 Phenol 1)<br>0,3 HALS 4) | 20,3 |

Tabelle 5

| Farbveränderung (Yellowness Index nach ASTM D 1925-70) nach Knetversuch (240 ° C, 40 Upm, 60 min) des Cycloolefincopolymeren A1 | | | | |
|---|---|---|---|---|
| Beispiel | Phosphorverbindung Gew.-Teile | sonst. Additive Gew.-Teile | YI | |
| | | | ungeknetet | geknetet |
| Vgl. III<br>2a | keine<br>0,1 (C) | | 5,3<br>5,0 | 54,8<br>33,6 |
| 2b | 0,1 (C) | 0,05 Phenol 1) | 6,3 | 52,0 |
| 2c | 0,1 (C) | 0,05 Phenol 1) | | |
| | | 0,3 HALS 2) | 6,1 | 30,5 |
| 2d | 0,1 (C) | 0,05 Phenol 1) | | |
| | | 0,3 HALS 3) | 6,6 | 44,3 |
| 2e | 0,1 (C) | 0,05 Phenol 1) | | |
| | | 0,3 HALS 4) | 19,4 | 55,2 |

Tabelle 6:

Wirkung von Phosphorverbindungen auf die Verarbeitungsstabilitität des Cycloolefincopolymeren A2

Knetbedingungen: 190 °C, 40 Upm, 60 min

Schmelzindex MFI 190/10 (5 min Aufschmelzzeit) vor dem Kneten 10 $cm^3$/10 min

| Beispiel | Phosphorverbindung Gew.-Teile | sonst. Additive Gew.-Teile | MFI nach Kneten |
|---|---|---|---|
| Vgl. IV | keine | | 22,6 |
| 3a | 0,1 (D) | | 15,4 |
| 3b | 0,1 (D) | 0,05 Phenol [1)] | 12,1 |
| 3c | 0,1 (D) | 0,05 Phenol [1)] | |
| | | 0,3 HALS [2)] | 13,0 |
| 3d | 0,1 (D) | 0,05 Phenol [1)] | |
| | | 0,3 HALS [3)] | 12,4 |
| 3e | 0,1 (D) | 0,05 Phenol [1)] | |
| | | 0,3 HALS [5)] | 19,9 |
| 3f | 0,1 (D) | 0,05 Phenol [1)] | |
| | | 0,3 HALS [6)] | 12,8 |
| 3g | 0,1 (D) | 0,05 Phenol [1)] | |
| | | 0,3 HALS [4)] | 12,2 |

Tabelle 7

| Farbänderung (Yellowness Index nach ASTM D 1926-70) des Cycloolefincopolymeren A2 nach Knetversuch (190 °C, 40 Upm, 60 min) | | | | |
|---|---|---|---|---|
| Beispiel | Phosphorverbindung Gew.-Teile | sonst. Additive Gew.-Teile | YI | |
| | | | ungeknetet | geknetet |
| Vgl. IV | keine | | 3,4 | 13,8 |
| 3a | 0,1 (D) | | 2,1 | 12,9 |
| 3b | 0,1 (D) | 0,05 Phenol [1)] | 1,0 | 25,1 |
| 3c | 0,1 (D) | 0,05 Phenol [1)] | | |
| | | 0,3 HALS [2)] | 3,2 | 20,9 |
| 3d | 0,1 (D) | 0,05 Phenol [1)] | | |
| | | 0,3 HALS [3)] | 1,4 | 26,6 |
| 3e | 0,1 (D) | 0,05 Phenol [1)] | | |
| | | 0,3 HALS [5)] | 3,1 | 16,2 |
| 3f | 0,1 (D) | 0,05 Phenol [1)] | | |
| | | 0,3 HALS [6)] | 1,6 | 16,4 |
| 3g | 0,1 (D) | 0,05 Phenol [1)] | | |
| | | 0,3 HALS [4)] | 1,4 | 15,8 |

Tabelle 8:

Wirkung von Phosphorverbindungen auf die Verarbeitungsstabilität des Cycloolefincopolymeren A2
Knetbedingungen: 190°C, 40 Upm, 60 min
Schmelzindex MFI 190/10 (5 Minuten Aufschmelzzeit) vor dem Kneten 10 $cm^3$/ 10 min

| Beispiel | Phosphorverbindung Gew.-Teile | sonst. Additive Gew.-Teile | MFI nach Kneten |
|---|---|---|---|
| Vgl. IV | keine | | 22,6 |
| 4a | 0,1 (E) | | 12,1 |
| 4b | 0,1 (E) | 0,05 Phenol [1)] | 13,2 |
| 4c | 0,1 (E) | 0,05 Phenol [1)]<br>0,03 HALS [2)] | 16,4 |
| 4d | 0,1 (E) | 0,05 Phenol [1)]<br>0,03 HALS [3)] | 12,0 |
| 4e | 0,1 (E) | 0,05 Phenol [1)]<br>0,3 HALS [5)] | 13,3 |
| 4f | 0,1 (E) | 0,05 Phenol [1)]<br>0,3 HALS [6)] | 13,2 |
| 4g | 0,1 (E) | 0,05 Phenol [1)]<br>0,3 HALS [4)] | 18,6 |

Tabelle 9

| Farbveränderung (Yellowness Index nach ASTM D 1925-70) des Cycloolefincopolymeren A2 nach Knetversuch (190 °C, 40 Upm, 60 min) | | | | |
|---|---|---|---|---|
| Beispiel | Phosphorverbindung Gew.-Teile | sonst. Additive Gew.-Teile | YI | |
| | | | ungeknetet | geknetet |
| Vgl. IV | keine | | 3,4 | 13,8 |
| 4a | 0,1 (E) | | 2,2 | 6,1 |
| 4b | 0,1 (E) | 0,05 Phenol [1)] | 1,1 | 22,3 |
| 4c | 0,1 (E) | 0,05 Phenol [1)] | | |
| | | 0,3 HALS [2)] | 1,1 | 9,0 |
| 4d | 0,1 (E) | 0,05 Phenol [1)] | | |
| | | 0,3 HALS [3)] | 1,7 | 10,2 |
| 4e | 0,1 (E) | 0,05 Phenol [1)] | | |
| | | 0,3 HALS [5)] | 1,5 | 18,3 |
| 4f | 0,1 (E) | 0,05 Phenol [1)] | | |
| | | 0,3 HALS [6)] | 1,7 | 28,6 |
| 4g | 0,1 (E) | 0,05 Phenol [1)] | | |
| | | 0,3 HALS [4)] | 1,6 | 19,7 |

Tabelle 10:

Wirkung von Phosphorverbindungen auf die Verarbeitungsstabilität des Cycloolefincopolymeren A2

Knetbedingungen: 190°C, 40 Upm, 60 min

Schmelzindex MFI 190/10 (5 Minuten Aufschmelzzeit) vor dem Kneten 10 $cm^3$/ 10 min

| Beispiel | Phosphorverbindung Gew.-Teile | sonst. Additive Gew.-Teile | MFI nach Kneten |
|---|---|---|---|
| Vgl. IV | keine | | 22,6 |
| 5a | 0,1 (F) | | 12,3 |
| 5b | 0,1 (F) | 0,05 Phenol 1) | 9,9 |
| 5c | 0,1 (F) | 0,05 Phenol 1) | |
| | | 0,3 HALS 2) | 19,6 |
| 5d | 0,1 (F) | 0,05 Phenol 1) | |
| | | 0,3 HALS 3) | 12,5 |
| 5e | 0,1 (F) | 0,05 Phenol 1) | |
| | | 0,3 HALS 5) | 13,0 |
| 5f | 0,1 (F) | 0,05 Phenol 1) | |
| | | 0,3 HALS 6) | 16,3 |
| 5g | 0,1 (F) | 0,05 Phenol 1) | |
| | | 0,3 HALS 4) | 13,8 |

Tabelle 11

| Farbveränderung (Yellowness Index nach ASTM D 1925-70) des Cycloolefincopolymeren A2 nach Knetversuch (190 °C, 40 Upm, 60 min) | | | | |
|---|---|---|---|---|
| Beispiel | Phosphorverbindung Gew.-Teile | sonst. Additive Gew.-Teile | YI | |
| | | | ungeknetet | geknetet |
| Vgl. IV | keine | | 3,4 | 13,8 |
| 5a | 0,1 (F) | | 0,8 | 7,3 |
| 5b | 0,1 (F) | 0,05 Phenol [1)] | 1,3 | 9,5 |
| 5c | 0,1 (F) | 0,05 Phenol [1)]<br>0,3 HALS [2)] | 1,0 | 13,8 |
| 5d | 0,1 (F) | 0,05 Phenol [1)]<br>0,3 HALS [3)] | 1,3 | 11,4 |
| 5e | 0,1 (F) | 0,05 Phenol [1)]<br>0,3 HALS [5)] | 1,4 | 10,3 |
| 5f | 0,1 (F) | 0,05 Phenol [1)]<br>0,3 HALS [6)] | 1,8 | 11,4 |
| 5g | 0,1 (F) | 0,05 Phenol [1)]<br>0,3 HALS [4)] | 1,7 | 20,3 |

Tabelle 12

| Farbverlauf an 1 mm-Preßplatten sofort nach Herstellung und nach Temperung (7 Tage bei 100 °C) | | |
|---|---|---|
| Beispiel | YI sofort | YI nach 7 Tagen |
| Vgl. I | 5,3 | 6,0 |
| 2a | 5,0 | 6,1 |
| 2b | 6,3 | 6,7 |
| 2c | 6,1 | 7,1 |
| 2d | 6,6 | 6,7 |
| 2e | 19,4 | 15,0 |
| Vgl. IV | 3,4 | 4,7 |
| 3a | 2,1 | 4,3 |
| 3b | 1,0 | 4,0 |
| 3c | 3,2 | 5,3 |
| 3d | 1,4 | 3,3 |
| 3e | 3,1 | 4,5 |
| 3f | 1,6 | 5,3 |
| 3g | 1,4 | 3,2 |
| 4a | 2,2 | 3,9 |
| 4b | 1,1 | 3,3 |
| 4c | 1,1 | 2,7 |
| 4d | 1,7 | 2,3 |
| 4e | 1,5 | 2,2 |
| 4f | 1,7 | 2,9 |
| 4g | 1,6 | 2,0 |
| 5a | 0,8 | 2,6 |
| 5b | 1,3 | 3,3 |
| 5c | 1,0 | 1,4 |
| 5d | 1,3 | 1,7 |
| 5e | 1,4 | 1,8 |
| 5f | 1,8 | 2,4 |
| 5g | 1,7 | 2,9 |

**Patentansprüche**

**1.** Cycloolefinpolymer-Formmasse mit verbesserter Stabilität gegen chemischen Abbau enthaltend 90 bis 99,99 Gew.-% eines Polymeren, welches Struktureinheiten enthält, die sich von mindestens einem Monomeren der Formeln I bis VII

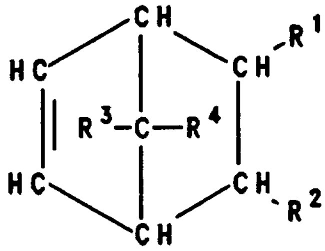

(I),

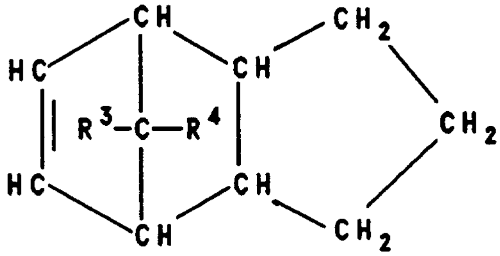

(II),

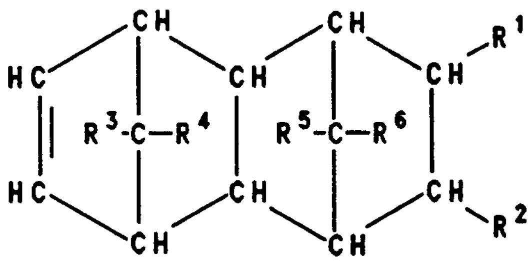

(III),

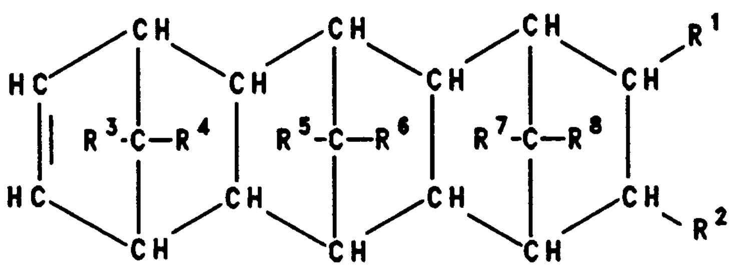

(IV),

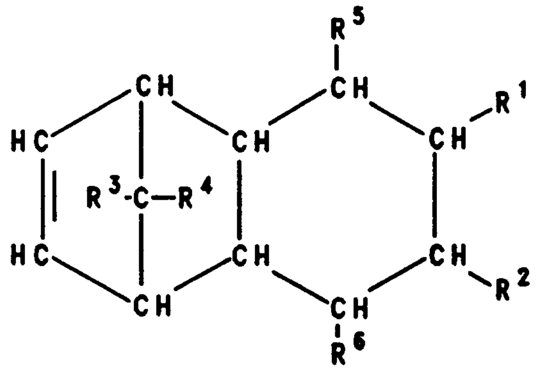

(V),

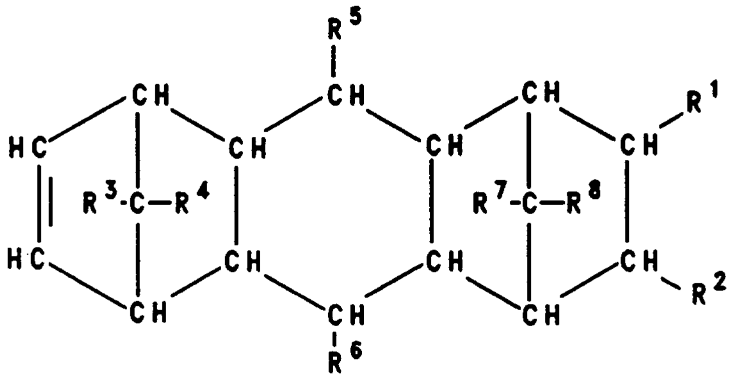

(VI),

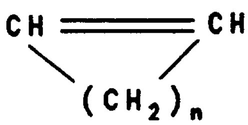

(VII)

ableiten, worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest, wobei gleiche Reste in den verschiedenen Formeln eine unterschiedliche Bedeutung haben können, bedeuten und n eine ganze Zahl von 2 bis 10 ist,
0,01 bis 10 Gew.-% mindestens einer phosphororganischen Verbindung aus der Gruppe, welche gebildet wird von Verbindungen

a) der Formel IX

$R^{13}$ - $[P(OR^{14})_2]_n$ (IX),

worin
n 1 oder 2 ist,
$R^{14}$ einen linearen oder verzweigten $C_8$-$C_{20}$-Alkylrest oder einen Phenylrest, der durch einen oder mehrere lineare oder verzweigte $C_1$-$C_8$-Alkylreste oder durch $C_5$-$C_8$-Cycloalkyl-, $C_6$-$C_{10}$-Aryl- oder $C_7$-$C_{10}$-Aralkylreste substituiert sein kann, bedeutet,
$R^{13}$ bei n = 1 einen Phenyl- oder Benzylrest, welcher 1 bis 3 Substituenten tragen kann, einen $\alpha$-Methylbenzyl-, $\alpha,\alpha$-Dimethylbenzyl- oder Naphthylrest oder einen 1 bis 5 Substituenten tragenden Naphthylrest bedeutet, wobei die Substituenten gleich oder verschieden sind und einen linearen oder verzweigten $C_1$-$C_8$-Alkylrest, einen $C_1$-$C_8$-Alkoxyrest, einen $C_1$-$C_{12}$-Alkylthiorest, einen $C_1$-$C_8$-Dialkylaminorest,einen $C_6$-$C_{10}$-Arylrest, einen $C_6$-$C_{10}$-Aryloxyrest oder Halogen mit einer Ordnungszahl von 9 bis 35 darstellen, und
$R^{13}$ bei n = 2 einen Phenylenrest, einen Biphenylenrest, einen Naphthylenrest, einen Diphenylenoxidrest, die unsubstituiert sind oder 1 bis 4 lineare oder verzweigte $C_1$-$C_8$-Alkylreste tragen, darstellt,

b) der Formel X

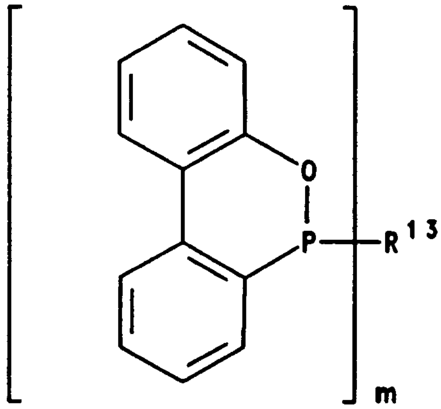

(X),

worin $R^{13}$ die zuvor genannte Bedeutung hat und m 1 oder 2 ist, oder
c) der Formel XI

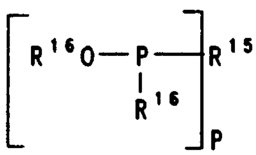

(XI)

worin die Reste $R^{16}$ unabhängig voneinander als einwertige Reste einen Phenyl- oder Naphthylrest darstellen, der jeweils 1 bis 5 Substituenten tragen kann, wobei die Substituenten gleich oder verschieden sind und einen nicht-aromatischen Kohlenwasserstoffrest, einen Alkoxyrest, Alkylthiorest oder Dialkylaminorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35 darstellen, und
$R^{15}$ als zweiwertiger Rest einen Phenylen-, Diphenylenoxid- oder Biphenylenrest, der unsubstituiert ist oder mit bis zu 4 nicht-aromatischen Kohlenwasserstoffresten mit 1 bis 8 Kohlenstoffatomen substituiert ist, oder einen Naphthylenrest, der unsubstituiert ist oder 1 bis 4 nicht-aromatische Kohlenwasserstoffreste mit 1 bis 8 Kohlenstoffatomen als Substituenten trägt, darstellt.

**2.** Formmasse nach Anspruch 1, dadurch gekennzeichnet, daß das Cycloolefinpolymere neben den Struktureinheiten, die von mindestens einem Monomeren der Formeln I bis VII abgeleitet sind, weitere Struktureinheiten enthält, die von mindestens einem acyclischen 1-Olefin der Formel VIII

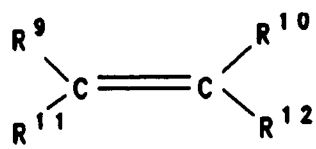

(VIII)

abgeleitet sind, worin $R^9$, $R^{10}$, $R^{11}$ und $R^{12}$ gleich oder verschieden sind und ein Wasserstoffatom oder einen $C_1$-$C_8$-Alkylrest bedeuten.

**3.** Formmasse nach Anspruch 1, dadurch gekennzeichnet, daß sie neben den Phosphorverbindungen übliche Additive enthält.

**4.** Formmasse nach Anspruch 1, dadurch gekennzeichnet, daß die phosphororganische Verbindung ein Derivat von Oxaphosphorin oder ein Phosphinigsäure- oder Phosphonigsäureester ist.

**5.** Formmasse nach Anspruch 4, dadurch gekennzeichnet, daß die phosphororganische Verbindung ein Phosphinigsäure- oder Phosphonigsäureester ist.

**6.** Verwendung der Formmasse nach Anspruch 1 zur Herstellung von Platten, Fasern, Folien und Schläuchen oder als Bindemittel für Lacke, Klebstoffe oder Kitte.

**7.** Verwendung der Formmasse nach Anspruch 3 zur Herstellung von Platten, Fasern, Folien und Schläuchen oder als Bindemittel für Lacke, Klebstoffe oder Kitte.

Europäisches Patentamt

# EUROPÄISCHER RECHERCHENBERICHT

Nummer der Anmeldung
EP 93 11 8899

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | WO-A-90 08173 (MITSUI PETROCHEMICAL INDUSTRIES) | | C08K5/53<br>C08L45/00 |
| A | & EP-A-0 423 346 (MITSUI PETROCHEMICAL INDUSTRIES)<br>* Seite 45, Zeile 15 - Zeile 16 *<br>* Seite 44, Tabelle 1-1 *<br>* Anspruch 3 *<br>--- | 1 | |
| A | DE-A-27 31 445 (VEB LEUNA-WERKE WALTER ULBRICHT)<br>* Beispiele 1-3 *<br>* Ansprüche 1-3 *<br>----- | 1-3,6,7 | |

| RECHERCHIERTE SACHGEBIETE (Int.Cl.5) |
|---|
| C08K<br>C08L<br>C08J |

Der vorliegende Recherchenbericht wurde für alle Patentansprüche erstellt

| Recherchenort | Abschlußdatum der Recherche | Prüfer |
|---|---|---|
| DEN HAAG | 15. Februar 1994 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)